# EUROPÄISCHE PATENTSCHRIFT

(11) **EP 2 185 896 B1**
(45) Veröffentlichungstag und Bekanntmachung des Hinweises auf die Patenterteilung: **11.06.2014**
(21) Anmeldenummer: 08736509.4
(22) Anmeldetag: 23.04.2008
(51) Int. Cl.: G01C 21/30, G01S 19/40, H04L 29/08

(54) **KORREKTUR EINER FAHRZEUGPOSITION MITTELS MARKANTER PUNKTE**
CORRECTION OF A VEHICLE POSITION BY MEANS OF CHARACTERISTIC POINTS
CORRECTION D'UNE POSITION DE VÉHICULE AU MOYEN DE POINTS MARQUANTS

(30) Priorität: 29.08.2007 DE 102007041047; 23.04.2008 DE 102008020446
(43) Veröffentlichungstag der Anmeldung: 19.05.2010
(73) Patentinhaber: Continental Teves AG & Co. OHG, 60488 Frankfurt (DE)
(72) Erfinder: STÄHLIN, Ulrich, 65760 Eschborn (DE)
(86) Internationale Anmeldenummer: PCT/EP2008/054938
(87) Internationale Veröffentlichungsnummer: WO 2009/030521

(56) Entgegenhaltungen:
- EP-A- 0 565 191
- DE-A1- 19 505 487
- US-A1- 2003 125 871

## Beschreibung

### Gebiet der Erfindung

Die Erfindung betrifft die Navigations- und Sicherheitstechnik für Fahrzeuge. Insbesondere betrifft die Erfindung eine Korrekturvorrichtung zur Korrektur einer Position eines Fahrzeugs, ein Korrektursystem, die Verwendung einer Korrekturvorrichtung in einem Fahrzeug, ein Verfahren, ein Computerprogrammprodukt und ein computerlesbares Medium.

### Technologischer Hintergrund

Für viele Aufgaben, wie z. B. Navigation, Kreuzungsassistenten oder andere Fahrerassistenzsysteme, ist in komplexen Verkehrssituationen, wie sie beispielsweise bei Autobahnkreuzen oder mehrspurigen Kreuzungen auftreten können, die Positionsgenauigkeit von GPS (Global Positioning System) und wahrscheinlich auch vom zukünftigen Galileo-System oft nicht ausreichend, da nicht mit genügender Genauigkeit erkannt werden kann, auf welcher Spur sich ein Fahrzeug gerade befindet.

Weiterhin ist beispielsweise in Tunneln oder Garagen normalerweise kein GPS-Empfang möglich. Daher wird dort zur Positionsbestimmung auf z.B. Raddrehzahlsensoren zurückgegriffen. Diese Positionierung wird jedoch umso schlechter, je dynamischer und je länger die Fahrt ohne direkten GPS-Empfang ist.

In diesem Zusammenhang offenbart die EP 0 565 191 A1 eine Anordnung zur Positionsbestimmung eines Fahrzeugs, die mit den Daten eines GPS-Empfängers, eines Kompasses und wenigstens eines Radsensors die Position des Fahrzeugs bestimmt. Mittels des Radsensors und des Kompasses können dabei markante Punkte im Straßenverlauf, wie etwa Kurven oder Kreuzungen, erkannt werden. Durch Abrufen der Daten einer digitalen Straßenkarte kann der von der Anordnung erkannte markante Punkt einer Position auf der digitalen Straßenkarte zugeordnet werden.

Aus der US 2003/125871 A1 ist ein System zum Aktualisieren, Verbessern und Weiterentwickeln einer geographischen Datenbasis bekannt, welche geographische Straßendaten einschließlich der Positionen von stationären Objekten wie Beschilderungen, Gebäuden und Brücken enthält. Mittels Datensammelfahrzeugen, die mit unterschiedlicher Art von Sensorik, wie z.B. GPS, Radar, Kamera, Gyroskop, Kompass oder Odometer ausgestattet sind, werden geographische Daten erfasst und über geeignete Datenverbindungen an die Datenbasis übertragen. Zudem können die Fahrzeuge auch über lokale Kopien der in der Datenbasis enthaltenen Daten verfügen. Damit zusammenhängend wird die Möglichkeit offenbart, mittels der im Fahrzeug vorhandenen lokalen Kopie der Daten und der Fahrzeugsensorik über Map Matching eine Positionsbestimmung des Fahrzeugs vorzunehmen. Dabei wird zunächst ein Objekt mittels der Sensorik erkannt, dann wird eine Position des Objekts aus der lokalen Kopie der Daten ausgelesen und schließlich wird dem Fahrzeug eine entsprechende Position zugewiesen. Somit ist es auch möglich, eine Position des Fahrzeugs bei Erkennen eines in den Daten enthaltenen Objekts zu korrigieren. Die im Zusammenhang mit Map Matching bzw. im Zusammenhang mit der Positionskorrektur beschriebenen Objekte werden mittels Radarsensoren oder Bildsensoren erfasst.

### Zusammenfassung der Erfindung

Es ist eine Aufgabe der Erfindung, eine verbesserte Positionsbestimmung für Fahrzeuge bereitzustellen.

Es sind eine Korrekturvorrichtung, ein Korrektursystem, eine Verwendung, ein Verfahren, ein Computerprogrammprodukt und ein computerlesbares Medium gemäß den Merkmalen der unabhängigen Ansprüche angegeben. Weiterbildungen der Erfindung ergeben sich aus den Unteransprüchen.

Die beschriebenen Ausführungsbeispiele betreffen gleichermaßen die Korrekturvorrichtung, das Korrektursystem, die Verwendung, das Verfahren, das Computerprogrammprodukt sowie das computerlesbare Medium.

Gemäß einem Ausführungsbeispiel der Erfindung ist eine Korrekturvorrichtung zur Korrektur einer Position eines Fahrzeugs angegeben, welche eine Speichereinheit zum Speichern von Daten aufweist, die mit einem markanten Punkt einer Fahrtroute des Fahrzeugs korrespondieren, und die zur Speicherung einer genauen ersten Position des markanten Punktes ausgeführt ist. Weiterhin sind eine Detektionseinheit zur Detektion des markanten Punktes auf der Fahrtroute sowie eine Korrektureinheit zur Korrektur einer gemessenen zweiten Position des Fahrzeugs auf Basis der genauen ersten Position des markanten Punktes vorgesehen. Die Detektionseinheit weist eine Kamera und zusätzlich eine ESP-Sensorik auf.

In anderen Worten kann in der Korrekturvorrichtung eine digitale Karte gespeichert sein, welche auch Informationen über eine Vielzahl an markanten Punkten entlang der Fahrtrouten des Fahrzeugs enthält. Hierbei kann es sich beispielsweise um signifikante Unebenheiten auf der Fahrbahn oder um optisch wahrnehmbare Besonderheiten handeln. Die digitalen Kartendaten und die Daten bezüglich der markanten Punkte können auch in unterschiedlichen Dateien und beispielsweise auf unterschiedlichen Speichermedien abgelegt sein. Auf diese Weise kann vermieden werden, dass die digitalen Kartendaten geändert werden müssen, wenn die Daten bezüglich der markanten Punkte geändert werden.

Während sich das Fahrzeug bewegt werden von der Fahrzeugsensorik Messungen durchgeführt. Wenn bei einer solchen Messung ein markanter Punkt auf der Fahrtroute detektiert wird, kann bestimmt werden, um welchen markanten Punkt es sich handelt (durch Vergleich mit den Daten auf der digitalen Karte und/oder durch Vergleich mit den gesondert gespeicherten Daten bezüglich der markanten Punkte). Nach einer eindeutigen Identifikation des markanten Punktes, dessen Position ja genau bekannt ist, wird eine Korrektur der gemessenen Fahrzeugposition vorgenommen.

Auf diese Weise kann die gemessene Position bei jedem markanten Punkt entlang der Fahrtroute korrigiert werden. Somit kann die Positionsbestimmung verbessert werden, ohne dass hierfür ein GPS-Empfang notwendig ist.

Gemäß einem weiteren Ausführungsbeispiel der Erfindung weist die Korrekturvorrichtung eine Positionsbestimmungseinheit zur Messung der zweiten Position des Fahrzeugs auf.

Die zweite Position des Fahrzeugs wird also zusätzlich oder alternativ zu einer Positionsbestimmung mittels ESP oder ähnlicher Sensorik über eine Positionsbestimmungseinheit gemessen.

Gemäß einem weiteren Ausführungsbeispiel der Erfindung ist die Positionsbestimmungseinheit zur Messung der zweiten Position mittels GPS ausgeführt, wofür sie einen GPS-Empfänger aufweist.

Gemäß einem weiteren Ausführungsbeispiel der Erfindung ist die Positionsbestimmungseinheit zur Messung der zweiten Position auf Basis eines fahrdynamischen Modells ausgeführt. Dieses fahrdynamische Modell greift beispielsweise auf Messdaten des Elektronischen Stabilitätsprogramms (ESP) und anderer Fahrzeugsensorik, wie beispielsweise Wegstreckenmesser oder Lenkradwinkelsensor, zurück. Auf diese Weise ist die Positionsbestimmung unabhängig von einem Satellitenempfang.

Gemäß einem weiteren Ausführungsbeispiel der Erfindung weist die Detektionseinheit zumindest einen ESP-Sensor und eine Kamera auf.

Auf diese Weise können beispielsweise Unebenheiten in der Fahrbahn oder bestimmte Markierungen am Fahrbahnrand detektiert werden.

Gemäß einem weiteren Ausführungsbeispiel der Erfindung weist die Korrekturvorrichtung weiterhin eine Kommunikationseinheit zum Empfang von Aktualisierungsdaten, die mit den markanten Punkten korrespondieren, auf.

Auf diese Weise kann dem Fahrzeug sofort mitgeteilt werden, wenn sich ein markanter Punkt ändert. Die hierbei zu übertragende Datenmenge ist vergleichsweise gering. Beispielsweise können die Aktualisierungsdaten von einer Zentrale oder aber auch von einem anderen Fahrzeug mittels Fahrzeug-zu-Fahrzeug Kommunikation übertragen werden.

Um die Gefahr eines Missbrauchs zu vermeiden, werden hierfür Verschlüsselungstechniken eingesetzt, mit deren Hilfe der jeweilige Sender genau identifizierbar ist.

Gemäß einem weiteren Ausführungsbeispiel der Erfindung ist ein Korrektursystem zur Korrektur einer Position eines Fahrzeugs angegeben, welches eine oben beschriebene Korrekturvorrichtung und eine Zentrale mit einer Kommunikationseinheit zum Senden der Aktualisierungsdaten an die Korrekturvorrichtung aufweist.

Bei der Zentrale kann es sich beispielsweise um ein Verkehrsleitsystem mit einem zentralen Server handeln, welches in der Lage ist, eine Vielzahl von Fahrzeugen mit individuellen Aktualisierungsdaten zu versorgen. Unter dem Begriff "individuelle Aktualisierungsdaten" ist zu verstehen, dass jedes einzelne Fahrzeug bestimmen kann, wann, in welchem Umfang und auf welches Gebiet bezogen das Fahrzeug Aktualisierungsdaten vom Zentralsystem empfangen möchte. Auf diese Weise kann der Datenverkehr reduziert werden.

Unter dem Begriff "digitale Karten" sind auch Karten für fortschrittliche Fahrerassistenzsysteme (ADAS, Advanced Driver Assistance Systems) zu verstehen, ohne dass eine Navigation stattfindet.

Die kabellose Übertragung bzw. der kabellose Empfang der Aktualisierungsdaten erfolgt beispielsweise per GSM, UMTS, WLAN (z. B. 802.11p) oder auch per WiMax. Es ist auch die Verwendung anderer Übertragungsprotokolle möglich. Die genannten Protokolle bieten den Vorteil der bereits erfolgten Standardisierung.

Bei dem Fahrzeug handelt es sich beispielsweise um ein Kraftfahrzeug, wie Auto, Bus oder Lastkraftwagen, oder aber auch um ein Schienenfahrzeug, ein Schiff, ein Luftfahrzeug, wie Helikopter oder Flugzeug, oder beispielsweise um ein Fahrrad.

Gemäß einem weiteren Ausführungsbeispiel der Erfindung ist die Verwendung einer oben beschriebenen Korrekturvorrichtung in einem Fahrzeug angegeben.

Gemäß einem weiteren Ausführungsbeispiel der Erfindung ist ein Verfahren zur Korrektur einer Position eines Fahrzeugs angegeben, bei welchem Daten gespeichert werden, die mit einem markanten Punkt einer Fahrtroute des Fahrzeugs korrespondieren. Weiterhin wird eine genaue erste Position des markanten Punktes gespeichert. Weiterhin erfolgt eine Detektion des markanten Punktes auf der Fahrtroute aus ESP-Sensordaten und Kartendaten und eine Korrektur einer gemessenen zweiten Position des Fahrzeugs auf Basis der genauen ersten Position des markanten Punktes.

Gemäß einem weiteren Ausführungsbeispiel der Erfindung ist ein Computerprogrammprodukt angegeben, das, wenn es auf einem Prozessor ausgeführt wird, den Prozessor anleitet, die oben angegebenen Verfahrensschritte durchzuführen.

Gemäß einem weiteren Ausführungsbeispiel der Erfindung ist ein computerlesbares Medium angegeben, auf dem ein Computerprogrammprodukt gespeichert ist, das, wenn es auf einem Prozessor ausgeführt wird, den Prozessor anleitet, die oben angegebenen Verfahrensschritte durchzuführen.

Eine grundsätzliche Überlegung der Erfindung ist darin zu sehen, dass die Position eines Fahrzeugs korrigiert oder überhaupt erst gemessen wird, indem markante Punkte auf der Fahrtroute des Fahrzeugs detektiert werden. Nach der Identifikation eines solchen markanten Punktes kann die Position des Fahrzeugs mit Hilfe von Positionsdaten, die mit diesem markanten Punkt korrespondieren, korrigiert oder erstmalig bestimmt werden.

Auf diese Weise kann die Positionsbestimmung für das Fahrzeug verbessert werden. Ein Satellitenempfang ist hierfür nicht zwingend erforderlich.

Im Folgenden werden mit Verweis auf die Figuren bevorzugte Ausführungsbeispiele der Erfindung beschrieben.
Fig. 1 zeigt eine schematische Darstellung einer Korrekturvorrichtung gemäß einem Ausführungsbeispiel der Erfindung.
Fig. 2 zeigt eine schematische Darstellung eines Gesamtsystems zur Positionskorrektur gemäß einem Ausführungsbeispiel der Erfindung.
Fig. 3 zeigt eine schematische Darstellung eines Ausschnitts einer digitalen Navigationskarte gemäß einem Ausführungsbeispiel der Erfindung.
Fig. 4 zeigt ein Flussdiagramm eines Verfahrens gemäß einem Ausführungsbeispiel der Erfindung.

Die Darstellungen in den Figuren sind schematisch und nicht maßstäblich.

In der folgenden Figurenbeschreibung werden für die gleichen oder ähnlichen Elemente die gleichen Bezugsziffern verwendet.

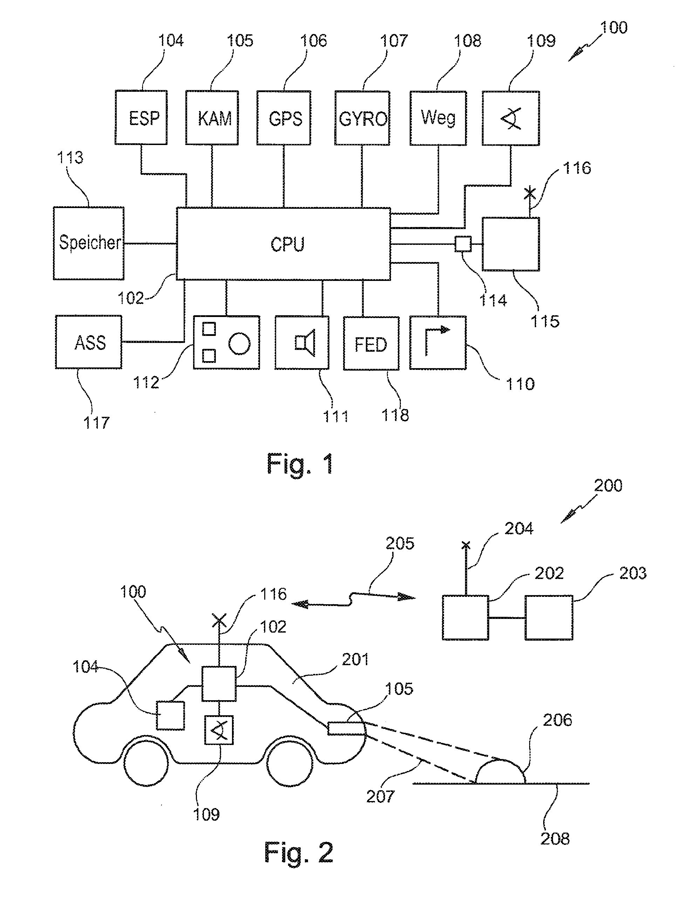

Fig. 1 zeigt eine schematische Darstellung einer Korrekturvorrichtung zur Korrektur einer Position eines Fahrzeugs mit ihren verschiedenen Komponenten. Die Korrekturvorrichtung 100 ist beispielsweise in dem Fahrzeug installiert und ist einerseits zur Korrektur einer gemessenen Position des Fahrzeugs und andererseits auch zur Erstbestimmung einer Fahrzeugposition ausgeführt. Die Korrekturvorrichtung 100 weist als zentrales Element eine Korrektureinheit 102 in Form eines Mikroprozessors auf. Weiterhin ist eine Kommunikationseinheit 115 mit einer Antenne 116 zur Kommunikation mit einer Zentrale oder mit anderen Fahrzeugen vorgesehen. Um eine Datensicherheit zu gewährleisten und einen möglichen Missbrauch zu verhindern, ist eine Verschlüsselungseinheit 114 vorgesehen, welche zwischen der Korrektureinheit 102 und der Kommunikationseinheit 115, 116 geschaltet ist und zum Verschlüsseln und Entschlüsseln gesendeter bzw. empfangener Daten ausgeführt ist.

Weiterhin ist eine Speichereinheit 113 zum Speichern von Daten, die mit einem markanten Punkt einer Fahrtroute des Fahrzeugs korrespondieren, und zur Speicherung einer genauen ersten Position des markanten Punktes vorgesehen.

Mit der Korrektur- oder Steuereinheit 102, beispielsweise in Form einer CPU, ist eine Eingabeeinheit 112 verbunden. Über die Eingabeeinheit 112 können verschiedene Einstellungen der Korrekturvorrichtung vorgenommen werden und beispielsweise für eine Navigationseinheit ein Zielort und ggf. auch ein Standort gewählt werden. Die Eingabe des Zielortes ist dabei beispielsweise durch die Eingabe des vollständigen Namens des Zielortes oder auch durch eine Auswahl aus einer Liste, die auf einer optischen Ausgabeeinheit, wie beispielsweise einem Monitor 110, dargestellt wird, möglich.

Auf dem Monitor 110 werden auch die Zielführungsinformationen ausgegeben. Darüber hinaus können die Zielführungsinformationen auch über eine akustische Ausgabeeinheit 111 ausgegeben werden. Die Ausgabe über eine akustische Ausgabeeinheit 111 hat den Vorteil, dass der Fahrer weniger vom aktuellen Verkehrsgeschehen abgelenkt wird. In dem Speicherelement 113, das mit der zentralen Korrektureinheit 102 verbunden ist oder in der Korrektureinheit 102 integriert ist, sind die Landkartendaten (Navigationskartendaten) und die Daten bezüglich der markanten Punkte in Form von Datensätzen abgelegt. Beispielsweise sind in dem Speicherelement 113 auch zusätzliche Informationen über Verkehrsbeschränkungen und dergleichen abgelegt und den Datensätzen zugeordnet.

An die zentrale Steuerung mit der Korrektureinheit 102 kann ein Fahrerassistenzsystem 117 angeschlossen sein, welches der Unterstützung des Fahrers dient.

Zur Bestimmung der aktuellen Fahrzeugposition weist die Korrekturvorrichtung 100 eine Navigationseinheit oder Positionsbestimmungseinheit, die z. B. in der zentralen Steuerung 102 integriert ist, und einen GPS-Empfänger 106 auf, der zum Empfang von Navigationssignalen von GPS-Satelliten ausgelegt ist. Natürlich kann die Navigationseinheit mit dem GPS-Empfänger 106 auch für andere Satellitennavigationssysteme, wie beispielsweise Galileo, ausgeführt sein.

Da die GPS-Signale aber beispielsweise im innerstädtischen Bereich nicht immer empfangbar sind, weist die Korrekturvorrichtung 100 zur Durchführung einer Koppelnavigation und zur Bestimmung der Fahrzeugposition zudem eine Detektionseinheit mit einem Richtungssensor 107, einem Wegstreckensensor 108, ggf. einem Lenkradwinkelsensor 109, sowie eine ESP-Sensorik 104 und einen optischen Detektor, wie beispielsweise eine Kamera 105, auf.

Die Signale des GPS-Empfängers und der übrigen Sensoren werden beispielsweise in der Korrektureinheit 102 bearbeitet. Die aus diesen Signalen ermittelte Fahrzeugposition wird mit der Position eines markanten Punktes auf der Fahrtroute verglichen, nachdem ein solcher markanter Punkt identifiziert worden ist. Nach einer erfolgten Korrektur der Fahrzeugposition kann die so gewonnene Zielführungsinformation über den Monitor 110 ausgegeben werden.

In anderen Worten werden in einer Datenbank im Fahrzeug (z. B. in einer digitalen Karte) markante Punkte mitsamt ihrer exakten GPS-Position hinterlegt. Sobald das Fahrzeug diese Punkte erreicht, kann die GPS-Position mit der hinterlegten Position korrigiert werden. Diese Korrektur sorgt bei vorhandenem GPS-Empfang für eine Verbesserung der Genauigkeit der Positionierung ähnlich einem Differential-GPS. Besteht kein GPS-Empfang, so wird die Genauigkeit der Positionsfortschreibung deutlich verbessert. Die markanten Punkte müssen dabei eindeutig mit bordeigener (ESP-)Sensorik oder Kameras erkennbar sein.

Beispielsweise kann es sich bei den markanten Punkten um Rampen, Ampeln, starke Unebenheiten in einer ansonsten flachen Straße, Schrägen, Straßenschilder, Gullydeckel, Beginn oder Ende von Schotterstrecken, Beginn oder Ende von gepflasterten Straßenabschnitten, die Straße querende Schienen und dergleichen handeln.

Die gespeicherten Daten können dabei auch lokal übermittelt werden, z. B. per Funk. So ist es möglich sich ändernden Gegebenheiten anzupassen. Die Übertragung der gespeicherten Daten in Form von Aktualisierungsdaten kann von benachbarten Fahrzeugen oder auch von einer Leitzentrale erfolgen.

Über die markanten Punkte ist es auch eingeschränkt möglich, eine Positionsbestimmung komplett ohne GPS-Empfänger durchzuführen. Hierzu wird zwischen den markanten Punkten die Position über ein fahrdynamisches Modell oder mehrere fahrdynamische Modelle bestimmt.

In einer Ausführungsform wird zur Korrektur von GPS das Differential-GPS genutzt, welches jedoch einen GPS-Empfang erfordert. Ist kein GPS-Signal vorhanden, so kann mittels ESP-Sensorik in fahrdynamischen Modellen die GPS-Position errechnet werden.

Über die markanten Punkte kann die GPS-Position auch bei langen Fahrten ohne Signalempfang korrigiert werden. Zusätzlich kann die Genauigkeit verbessert werden, ohne dass dabei neue Infrastruktur benötigt wird, wie das bei Differential-GPS durch die zusätzlich notwendigen Sender der Fall ist. Durch die Verwendung von markanten Punkten ist keine zusätzliche Sensorik im Fahrzeug notwendig.

Fig. 2 zeigt eine schematische Darstellung eines Gesamtsystems, welches eine in einem Fahrzeug 201 integrierte Korrekturvorrichtung 100 und eine Zentrale 200 aufweist. Die Korrekturvorrichtung 100 weist neben der Kommunikationseinrichtung mit Antenne 116 und der zentralen Steuerung oder Korrektureinheit 102 eine komplette Fahrzeugsensorik auf. Die Fahrzeugsensorik umfasst hierbei eine ESP-Sensorik 104, ein Kamerasystem 105 sowie einen Lenkradwinkelsensor 109.

Über das Kamerasystem 105 können Besonderheiten der Fahrtroute 205 detektiert werden. Hierfür rastert das Kamerasystem 105 mit einem Detektionsstrahl 207 die Umgebung ab. Wird ein markanter Punkt, wie beispielsweise eine Erhebung 206 am Fahrbahnrad oder auf der Fahrbahn detektiert, wird ein entsprechendes Detektionssignal vom Kamerasystem 105 an die Steuerung 102 übergeben. In der Steuerung 102 erfolgt dann eine entsprechende Analyse des Detektionssignals. Für diese Analyse können ggf. noch weitere Messwerte, beispielsweise von der ESP-Sensorik 104, herangezogen werden. Beispielsweise kann die ESP-Sensorik 104 detektieren, ob es sich hierbei wirklich um eine Unebenheit auf der Fahrbahn handelt.

Beispielsweise ist in der digitalen Karte hinterlegt, dass der Beginn einer Parkhausrampe bei der Position (0/0) liegt. Das Fahrzeug erkennt die Steigung der Parkhausrampe mittels ESP-Sensorik und korrigiert die interne Position auf den Wert (0/0).

Die Zentrale 200 weist eine Kommunikationseinrichtung 202 mit einer Antenne 204 und einem zentralen Server 203 auf. Von der Zentrale aus können über den Kommunikationspfad 205 Aktualisierungsdaten an die einzelnen Fahrzeuge übermittelt werden. Ebenso können die einzelnen Fahrzeuge Messdaten an die Zentrale 200 übermitteln, über welche diese neuen Daten dann anderen Fahrzeugen mitgeteilt werden können.

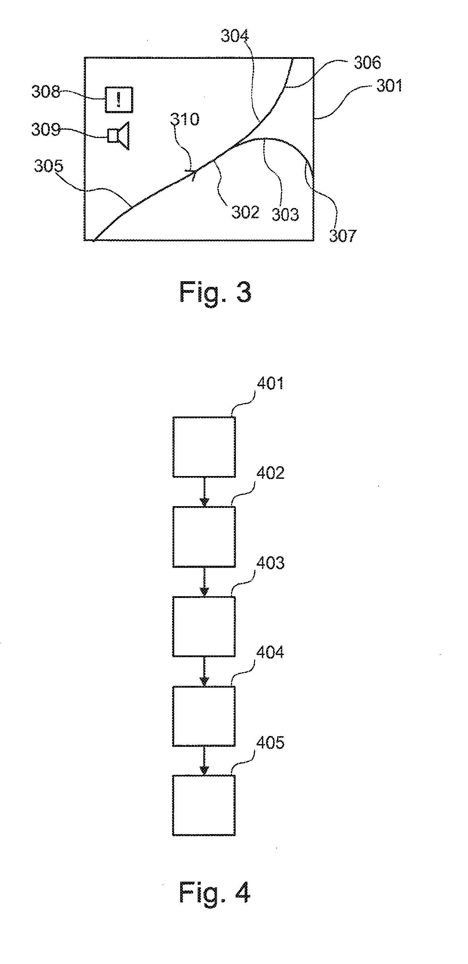

Fig. 3 zeigt eine schematische Darstellung eines Ausschnitts 301 einer digitalen Karte. Es ist eine Straße 305 zu sehen, welche sich in zwei Arme 304, 307 aufgabelt. Das Fahrzeug 310 nähert sich der Gabelung aus südwestlicher Richtung. Sobald es den Punkt 302 überfährt, detektiert die Fahrzeugsensorik einen sog. "markanten Punkt", bei dem es sich beispielsweise um eine Unebenheit mit charakteristischer Ausprägung auf der Fahrbahn handelt. Nach einer Analyse der detektierten Daten kann die Position des Fahrzeugs mit hoher Genauigkeit festgelegt werden. Wird nun nachfolgend ein zweiter markanter Punkt 303 detektiert (beispielsweise eine scharfe Kurve), erkennt das Fahrzeug, dass die Route 307 gewählt wurde. Wird andererseits ein anderer markanter Punkt 304 detektiert, bei dem es sich beispielsweise um eine Unterführung handelt, erkennt das Fahrzeug, dass die Route 306 gewählt worden ist.

Die entsprechenden Informationen können beispielsweise optisch im Feld 308 oder auch akustisch (symbolisiert durch Bezugszeichen 309) ausgegeben werden.

Fig. 4 zeigt ein Flussdiagramm eines Verfahrens gemäß einem Ausführungsbeispiel der Erfindung. In Schritt 401 erfolgt eine Kommunikation der Korrekturvorrichtung mit der Zentrale. Die Zentrale übermittelt hierbei Aktualisierungsdaten hinsichtlich der markanten Punkte. In Schritt 402 werden die markanten Punkte inklusive den GPS-Positionen im Fahrzeug gespeichert. Diese Punkte können, ggf. lokal, in regelmäßigen oder vom Fahrer selbst gewählten Abständen z. B. über Funk aktualisiert werden.

In Schritt 403 erfolgt die Erkennung eines solchen markanten Punktes über eine bereits vorhandene Sensorik (beispielsweise ESP-Sensorik) oder eine Kamera. Es können auch eine Vielzahl von Kameras vorgesehen sein, welche verschiedene Empfindlichkeiten und Blickrichtungen aufweisen. Gleichzeitig wird die GPS-Position des Fahrzeugs detektiert. In Schritt 404 erfolgt eine Analyse der von der Sensorik detektierten Daten. Ggf. sind hierfür Filterfunktionen vorgesehen, um zu vermeiden, dass Fehlmessungen mit einem markanten Punkt in Verbindung gebracht werden. In Gegenden ohne GPS-Empfang oder falls das GPS-Gerät ausgeschaltet ist, wird die Fahrzeugposition auf Basis der markanten Punkte korrigiert (Schritt 405). Auf diese Weise kann die GPS-Genauigkeit verbessert werden. Weiterhin ist auf diese Weise eine Bestimmung der GPS-Position ohne GPS-Empfänger möglich.

Ergänzend sei darauf hingewiesen, dass "umfassend" und "aufweisend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkungen anzusehen.

## Patentansprüche

1. Korrekturvorrichtung zur Korrektur einer Position eines Fahrzeugs, die Korrekturvorrichtung aufweisend:
eine Speichereinheit (113) zum Speichern von Daten, die mit einem markanten Punkt einer Fahrtroute des Fahrzeugs korrespondieren, und zur Speicherung einer genauen ersten Position des markanten Punktes;
eine Detektionseinheit (104) zur Detektion des markanten Punktes auf der Fahrtroute; und
eine Korrektureinheit (102) zur Korrektur einer gemessenen zweiten Position des Fahrzeugs auf Basis der genauen ersten Position des markanten Punktes, wobei die Detektionseinheit (104) eine Kamera (105) aufweist,
**dadurch gekennzeichnet, dass** die Detektionseinheit (104) zusätzlich eine ESP-Sensorik (104) aufweist, und
wobei die Detektionseinheit zur Detektion des markanten Punktes auf der Fahrtroute aus Kameradaten sowie aus ESP-Sensordaten eingerichtet ist.

2. Korrekturvorrichtung nach Anspruch 1, weiterhin aufweisend:
eine Positionsbestimmungseinheit (102, 106) zur Messung der zweiten Position des Fahrzeugs.

3. Korrekturvorrichtung nach Anspruch 2,
wobei die Positionsbestimmungseinheit (102, 106) zur Messung der zweiten Position einen GPS-Empfänger (106) aufweist.

4. Korrekturvorrichtung nach einem der Ansprüche 2 oder 3,
wobei die Positionsbestimmungseinheit (102, 106) zur Messung der zweiten Position auf Basis eines fahrdynamischen Modells ausgeführt ist.

5. Korrekturvorrichtung nach einem der vorhergehenden Ansprüche, weiterhin aufweisend:
eine Kommunikationseinheit (115, 116) zum Empfang von Aktualisierungsdaten, die mit den markanten Punkten korrespondieren.

6. Korrektursystem zur Korrektur einer Position eines Fahrzeugs, das Korrektursystem aufweisend:
eine Korrekturvorrichtung nach einem der Ansprüche 1 bis 6;
eine Zentrale (200) mit einer Kommunikationseinheit (202, 204) zum Senden der Aktualisierungsdaten an die Korrekturvorrichtung.

7. Verwendung einer Korrekturvorrichtung nach einem der Ansprüche 1 bis 5 in einem Fahrzeug.

8. Verfahren zur Korrektur einer Position eines Fahrzeugs, das Verfahren aufweisend die Schritte:
Speichern von Daten, die mit einem markanten Punkt einer Fahrtroute des Fahrzeugs korrespondieren, und zur Speicherung einer genauen ersten Position des markanten Punktes;
Detektion des markanten Punktes auf der Fahrtroute; und
Korrektur einer gemessenen zweiten Position des Fahrzeugs auf Basis der genauen ersten Position des markanten Punktes, wobei die Detektion des markanten Punktes auf der Fahrtroute aus Kameradaten erfolgt,
**dadurch gekennzeichnet, dass** die Detektion des markanten Punktes auf der Fahrtroute zusätzlich aus ESP-Sensordaten erfolgt.

9. Computerprogrammprodukt, das, wenn es auf einem Prozessor ausgeführt wird, den Prozessor anleitet, die folgenden Schritte durchzuführen:
Speichern von Daten, die mit einem markanten Punkt einer Fahrtroute des Fahrzeugs korrespondieren, und zur Speicherung einer genauen ersten Position des markanten Punktes;
Detektion des markanten Punktes auf der Fahrtroute aus Kameradaten; und
Korrektur einer gemessenen zweiten Position des Fahrzeugs auf Basis der genauen ersten Position des markanten Punktes,
**dadurch gekennzeichnet, dass** die Detektion des markanten Punktes auf der Fahrtroute zusätzlich aus ESP-Sensordaten erfolgt.

10. Computerlesbares Medium, auf dem ein Computerprogrammprodukt nach Anspruch 9 gespeichert ist.

## Claims

1. Correction apparatus for correcting a position for a vehicle, said correction apparatus having:
a memory unit (113) for storing data which correspond to a landmark on a journey route of the vehicle and for storing an accurate first position for the landmark;
a detection unit (104) for detecting the landmark on the journey route; and
a correction unit (102) for correcting a measured second position for the vehicle on the basis of the accurate first position of the landmark, wherein the detection unit (104) has a camera (105),
**characterized in that** the detection unit (104) additionally has an ESP sensor system (104), and wherein the detection unit is set up for the detection of the landmark on the journey route from camera data and from ESP sensor data.

2. Correction apparatus according to Claim 1, also having:
a position-finding unit (102, 106) for measuring the second position of the vehicle.

3. Correction apparatus according to Claim 2,
wherein the position-finding unit (102, 106) has a GPS receiver (106) for measuring the second position.

4. Correction apparatus according to one of Claims 2 and 3,
wherein the position-finding unit (102, 106) is designed to measure the second position on the basis of a model of driving dynamics.

5. Correction apparatus according to one of the preceding claims, also having:
a communication unit (115, 116) for receiving update data which correspond to the landmarks.

6. Correction system for correcting a position for a vehicle, said correction system having:
a correction apparatus according to one of Claims 1 to 5;
a control center (200) with a communication unit (202, 204) for sending the update data to the correction apparatus.

7. Use of a correction apparatus according to one of Claims 1 to 5 in a vehicle.

8. Method for correcting a position for a vehicle, said method having the following steps:
data which correspond to a landmark on a journey route of the vehicle are stored and an accurate first position for the landmark is stored;
the landmark is detected on the journey route; and
a measured second position for the vehicle is corrected on the basis of the accurate first position of the landmark, wherein the landmark on the journey route is detected from camera data,
**characterized in that** the landmark on the journey route is additionally detected from ESP sensor data.

9. Computer program product which, when executed on a processor, instructs the processor to perform the following steps:
storage of data which correspond to a landmark on a journey route of the vehicle, and storage of an accurate first position for the landmark;
detection of the landmark on the journey route from camera data; and
correction of a measured second position for the vehicle on the basis of the accurate first position of the landmark,
**characterized in that** the landmark on the journey route is additionally detected from ESP sensor data.

10. Computer-readable medium which stores a computer program product according to Claim 9.

## Revendications

1. Dispositif de correction permettant de corriger la position d'un véhicule, le dispositif de correction comprenant :
une unité de mémoire (113) qui conserve des données qui correspondent à un point marquant d'un itinéraire de déplacement du véhicule et qui conserve une première position précise du point marquant,
une unité de détection (104) qui détecte le point marquant sur l'itinéraire de déplacement et
une unité de correction (102) qui corrige une deuxième position mesurée du véhicule sur la base de la première position précise du point marquant, l'unité de détection (104) présentant une caméra (105), **caractérisé en ce que**
l'unité de détection (104) présente de plus un ensemble (104) de capteurs ESP et
**en ce que** l'unité de détection est conçue pour détecter le point marquant sur l'itinéraire de déplacement à partir de données de caméra ainsi que de données des capteurs ESP.

2. Dispositif de correction selon la revendication 1, présentant en outre une unité (102, 106) de détermination de position qui mesure la deuxième position du véhicule.

3. Dispositif de correction selon la revendication 2, dans lequel l'unité de détermination de position (102, 106) présente un récepteur GPS (106) qui mesure la deuxième position.

4. Dispositif de correction selon l'une des revendications 2 ou 3, dans lequel l'unité (102, 106) de détermination de position est conçue pour mesurer la deuxième position sur la base d'un modèle dynamique du roulage.

5. Dispositif de correction selon l'une des revendications précédentes, présentant en outre une unité de communication (115, 116) qui reçoit des données de mise à jour qui correspondent au point marquant.

6. Système de correction destiné à corriger la position d'un véhicule, le système de correction présentant :
un dispositif de correction selon l'une des revendications 1 à 5 et
une centrale (200) dotée d'une unité de communication (202, 204) qui envoie les données de mise à jour au dispositif de correction.

7. Utilisation d'un dispositif de correction selon l'une des revendications 1 à 5 dans un véhicule.

8. Procédé de correction de la position d'un véhicule, le procédé comportant les étapes qui consistent à :
conserver des données qui correspondent à un point marquant de l'itinéraire de déplacement du véhicule et qui conservent une première position précise du point marquant,
détecter le point marquant sur l'itinéraire de déplacement et
corriger une deuxième position du véhicule mesurée sur la base de la première position précise du point marquant, la détection du point marquant sur l'itinéraire de déplacement s'effectuant à partir de données de caméra,
**caractérisé en ce que**
la détection du point marquant sur l'itinéraire de déplacement s'effectue de plus à partir de données de capteurs ESP.

9. Produit de programme informatique qui, lorsqu'il est exécuté sur un processeur, amène le processeur à réaliser les étapes suivantes :
conserver des données qui correspondent à un point marquant de l'itinéraire de déplacement du véhicule et qui conservent une première position précise du point marquant,
détecter le point marquant sur l'itinéraire de déplacement et
corriger une deuxième position du véhicule mesurée sur la base de la première position précise du point marquant, la détection du point marquant sur l'itinéraire de déplacement s'effectuant à partir de données de caméra,
**caractérisé en ce que**
la détection du point marquant sur l'itinéraire de déplacement s'effectue de plus à partir de données de capteurs ESP.

10. Support lisible par ordinateur et sur lequel un produit de programme informatique selon la revendication 9 est conservé en mémoire.
